# FASCICULE DE BREVET EUROPEEN

(11) **EP 1 255 023 B1**
(45) Date de publication et mention de la délivrance du brevet: **21.12.2005**
(21) Numéro de dépôt: 02291097.0
(22) Date de dépôt: 02.05.2002
(51) Int. Cl.: F01D 25/16, F02C 7/06, F02C 7/32

(54) **Agencement de montage de deux lignes d'arbres coaxiales**
Montage zweier koaxialer Wellen
Mounting assembly of two coaxial shafts

(30) Priorité: 03.05.2001 FR 0105900
(43) Date de publication de la demande: 06.11.2002
(73) Titulaire: SNECMA, 75015 Paris (FR)
(72) Inventeur: Brossier, Pascal Noel, 77630 Saint Martin (FR); Miraucourt, Carmen, 77170 Brie Comte Robert (FR)

(56) Documents cités:
- EP-A- 0 359 659
- EP-A- 0 987 457
- FR-A- 935 401
- FR-A- 2 494 342
- GB-A- 1 085 619
- GB-A- 1 130 279
- US-A- 2 932 443
- US-A- 4 201 426
- US-A- 5 201 844

## Description

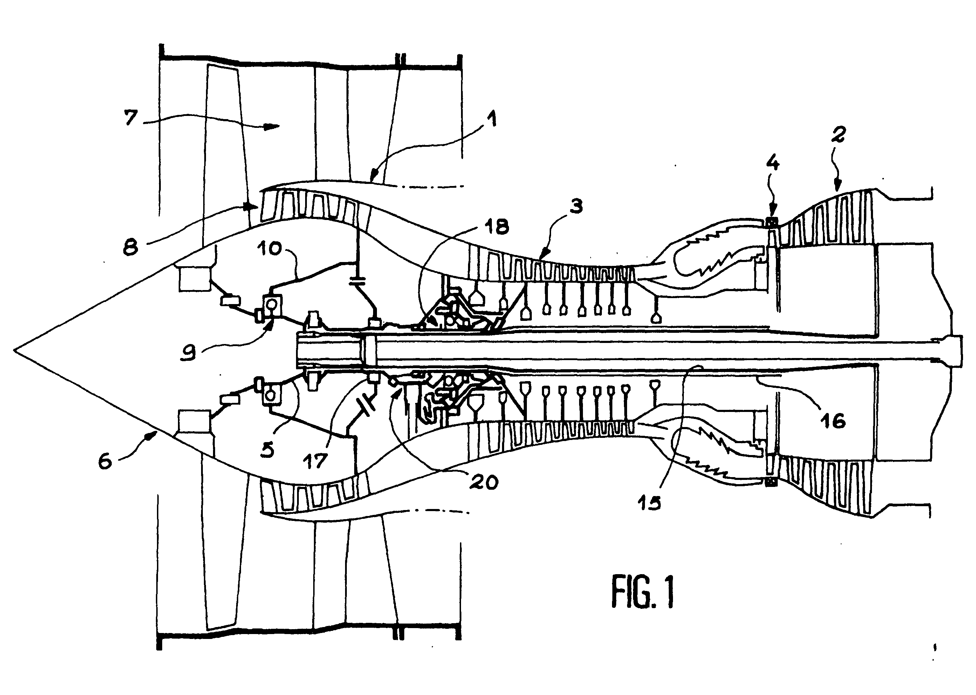

Le sujet de cette invention est un agencement de montage de deux lignes d'arbres coaxiales et notamment d'une ligne d'arbres dite à basse pression, reliant d'après la figure 1 le compresseur à basse pression 1 à la turbine à basse pression 2 dans une turbine à gaz, qu'entoure une ligne d'arbres à haute pression reliant le compresseur à haute pression 3 à la turbine à haute pression 4.

Dans une telle machine, la ligne d'arbres interne 15 (à basse pression) dépasse vers l'avant de la ligne d'arbres externe 16 (à haute pression) et peut finir en un bout d'arbre 5 porteur d'une soufflante 6 volumineuse équipée d'aubes de grand rayon pour refouler de l'air dans une veine auxiliaire 7 entourant la veine principale 8 de gaz, et dont la rupture accidentelle provoque un balourd important sur la ligne d'arbres interne 15. On est alors conduit à adopter certains aménagements. Tout d'abord, un palier 9, dit numéro 1, tout à l'avant de la ligne d'arbres interne 15, peut être rendu fusible ou cassant, c'est-à-dire monté sur un support 10 de faible résistance qui se rompt à l'apparition du balourd, afin de ne pas transmettre au reste de la structure du stator les efforts importants qui sont alors produits. Le bout d'arbre 5 est alors libre de basculer en cédant à la force du balourd jusqu'à ce que l'ensemble qu'il forme avec la soufflante 6 trouve une nouvelle position d'équilibre en rotation et sans que d'autres dégâts soient nécessairement produits jusqu'à l'arrêt de la machine. Le bout d'arbre 5 effectue ce mouvement basculant autour d'un palier dit numéro 2 derrière le précédent, qui soutient son extrémité postérieure ainsi qu'un arbre principal de la ligne d'arbres interne 15. Ce palier porte la référence 17. Il assure aussi la position axiale de la ligne d'arbres interne 15.

Un pignon 20 de prise de mouvement, destiné en particulier à faire démarrer la machine et actionné par un arbre de transmission 25 perpendiculaire aux lignes d'arbres 15 et 16, doit être placé entre ce palier 17 et un palier dit numéro 3 (de référence 18) qui offre un support à l'extrémité antérieure de la ligne d'arbres externe 16. Le palier 17 précédent, étant déporté aussi en arrière que possible pour améliorer la tenue dynamique de la ligne d'arbres interne 15, n'est séparé de lui que par un espace juste suffisant pour loger le pignon 20. Un écrou de montage est vissé autour de l'extrémité antérieure de la ligne d'arbres externe 16 pour la retenir contre ce palier 18 en butant sur lui. Cet écrou, qui s'étend à l'avant du palier 18 et sur le pignon 20 de prise de mouvement, est peu accessible, d'autant moins qu'un manchon porte-joints, chevauchant l'extrémité antérieure de la ligne d'arbres externe 16 et une portion de la ligne d'arbres interne 15 pour établir une étanchéité entre eux, doit encore être placé derrière le palier 17 et immédiatement en avant de l'écrou. Un démontage de la ligne d'arbres 16 à haute pression, préliminaire à un entretien, ne peut généralement être accompli qu'après avoir démonté la machine à l'avant de l'écrou, et notamment la soufflante 6, pour pouvoir l'atteindre et le dévisser.

On pourra se reporter au brevet français 2 783 579 pour la description d'un agencement par lequel l'écrou peut être dévissé par l'arrière, au moyen d'un outil spécial qui est introduit dans l'espace annulaire entre les lignes d'arbres, ce qui est plus commode malgré l'étroitesse de cet espace, puisque aucun démontage important d'éléments de la machine n'est alors nécessaire pour pouvoir retirer la ligne d'arbres à haute pression ; mais l'agencement retenu consiste à visser l'écrou dans la ligne d'arbres externe alors qu'il est classiquement vissé autour d'elle, ce qui oblige à bouleverser toute la conception de l'extrémité antérieure de cette ligne d'arbres et peut donc faire surgir d'autres inconvénients. Il est ici proposé une autre solution pour accéder librement à l'écrou de maintien de la ligne d'arbres externe 16 par l'arrière sans modifier profondément la conception : l'exiguïté d'espace autour de l'écrou impose quelques aménagements aux pièces environnantes de la machine, mais on verra qu'ils s'appliquent essentiellement aux organes d'étanchéité et de prise de mouvement, dont la conception est moins contraignante.

Sous sa forme la plus générale, l'agencement représentatif de l'invention comprend une ligne d'arbres interne et une ligne d'arbres externe qui sont coaxiales, une partie antérieure de la ligne d'arbres interne dépassant d'une extrémité antérieure de la ligne d'arbres externe, un manchon entourant les lignes d'arbres et portant deux joints d'étanchéité associés respectivement à elles, un palier soutenant la ligne d'arbres externe près de l'extrémité antérieure et un écrou de retenue du palier vissé autour de l'extrémité antérieure, caractérisé en ce qu'il comprend une entretoise ayant une partie d'ajustement glissée autour de la ligne d'arbres externe et enserrée entre l'écrou et le palier, et une partie d'étanchéité disposée autour de l'écrou et sur laquelle frotte le joint d'étanchéité associé à la ligne d'arbres externe.

Les avantages de cette disposition ainsi que d'autres aspects de l'invention seront mieux découverts au moyen du commentaire des figures suivantes :
- la figure 1 déjà décrite est une vue générale d'une turbine à gaz ;
- la figure 2 représente un agencement antérieur à l'invention et où les problèmes d'accès à l'écrou évoqués plus haut ne sont pas résolus ;
- la figure 3 est une vue d'un agencement conforme à l'invention ; et
- la figure 4 est une vue d'un autre agencement conforme à l'invention.

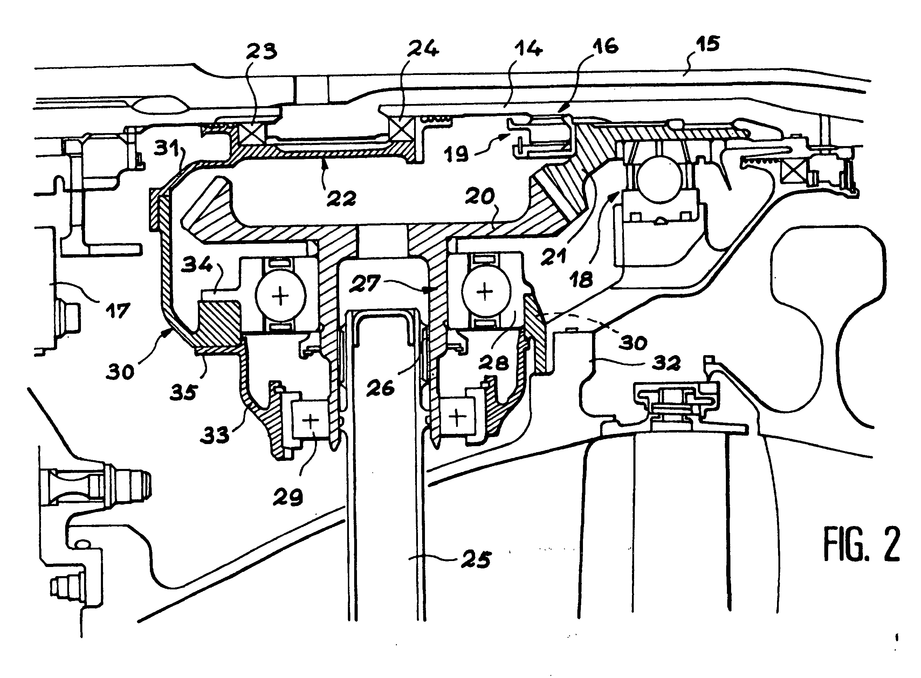

Se reportant à la figure 2, on aperçoit une portion de la ligne d'arbres interne 15, l'extrémité antérieure de la ligne d'arbres externe 16, un bout du palier numéro 2 17, le palier numéro 3 18, l'écrou 19 de montage du palier 18, le pignon 20 de prise de mouvement, une couronne 21 engrenant avec le pignon 20 et retenue entre la ligne d'arbres externe 16, l'écrou 19 et le palier 18 pour participer au montage en butée de celui-ci, le manchon porte-joints 22, ses deux joints 23 et 24 frottant sur des portions contiguës des lignes d'arbres 15 et 16 ; et l'environnement du pignon 20 comprend les pièces suivantes : un arbre de transmission 25 relié en rotation au pignon 20 par des cannelures 26 et engagé dans un moyeu 27 du pignon 20 ; une paire de paliers 28 et 29 engagés autour du moyeu 27 ; un boîtier 30 relié par vissage à une extension 31 du manchon 22 et (à droite sur la figure) à un carter 32 du stator ; et une virole 33 vissée au boîtier 30, à laquelle le palier 29 éloigné du pignon 20 est assujetti, alors que l'autre palier 28, proche du pignon 20, est assujetti au moyeu 127 et glisse dans le boîtier 30 ; des collerettes 34 et 35 du palier 28 proche du pignons 20 et de la virole 33 sont en butée sur le boîtier 30 et vissées à lui pour garantir une position invariable aux paliers 28 et 29 le long du moyeu 27. les vis de fixation n'ont pas été illustrés par souci de simplification du dessin. Les moyens d'assujettissement des paliers 28 et 29 comprennent des écrous, des rondelles de butée, des emmanchements à force, de manière connue. Ici, le palier 28 est un roulement à billes et l'autre palier 29 est un roulement à rouleaux, dépourvu de bague interne et dont les rouleaux s'appuient directement sur le moyeu 27.

Il est utile de mentionner le mode de montage de l'ensemble au pignon 20 après qu'on a vissé l'écrou 19. Le pignon 20, le palier 28 proche de lui et le boîtier 30 sont installés en vissant ce dernier sur le carter 32, puis la virole 33 et le palier 29 sont installés en fixant celle-là au boîtier 30, le manchon porte-joints 22 est fixé au boîtier 30 en le faisant glisser vers l'arrière ; enfin, l'arbre de transmission 25 est introduit dans le moyeu 27. On constate que l'écrou 19, bien entouré par d'autres pièces, est devenu inaccessible, sauf après des démontages importants. Comme le joint 24 frotte sur une lèvre 14 de la ligne d'arbres externe 16 qui s'étend à l'avant de l'écrou 19 et que celui-ci est vissé autour de cette ligne d'arbres 16, le manchon porte-joints 22 sépare complètement l'écrou 19 de l'espace annulaire 13 entre les lignes d'arbres 15 et 16.

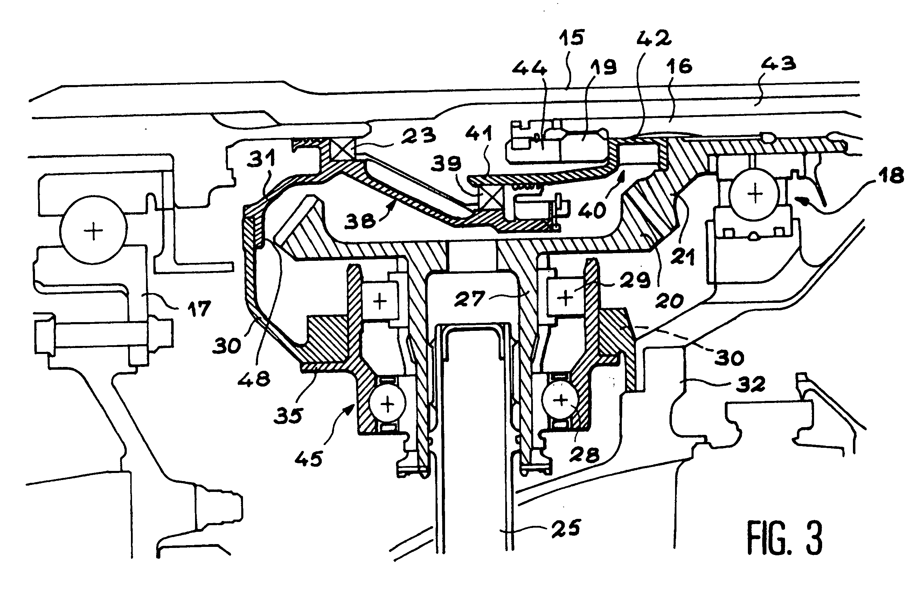

La figure 3 illustre une première réalisation de l'invention et montre tout d'abord une modification du manchon porte-joints, auquel on a ici attribué la référence 38 et qui a une forme conique, le joint 39 assurant l'étanchéité du côté de la ligne d'arbres à haute pression 16 étant maintenant d'un diamètre plus important que le joint 23, inchangé, affecté à l'étanchéité du côté de la ligne d'arbres à basse pression 15 ; le joint 39 ne frotte pas sur la ligne d'arbres 16 proprement dite, mais sur une portée d'étanchéité 41 d'une entretoise 40 intégrée à la ligne d'arbres à haute pression 16 et comprenant à cette fin une portée de butée 42 enfilée sur ladite ligne d'arbres et comprimée par l'écrou 19 entre lui et la couronne 21.

Il résulte de cela que la portée d'étanchéité 41 et le manchon 38 entourent l'écrou 19 au lieu de le couvrir par l'avant et qu'il devient accessible par l'arrière, au moyen d'un outil à griffes non représenté, qu'on peut glisser dans l'intervalle annulaire 43 compris entre les lignes d'arbres 15 et 16, et que l'écrou 19 est à l'extrémité antérieure de la ligne d'arbres 16, la lèvre 14 qu'il entourait ayant été remplacée par la portée d'étanchéité 41. La référence 44 est attribuée à une pièce de freinage de l'écrou 19, qui comporte des dents de crabotage pénétrant dans l'écrou 19 et la ligne d'arbres externe 16 pour interdire toute rotation relative quand elle est placée ; elle est en forme d'anneau fendu et en une matière élastique qui permet de l'ouvrir pour la mettre en place.

Certains aménagements peuvent être proposés du côté du pignon 20 pour adapter la structure à la modification de forme du manchon porte-joints 38 : on retrouve les deux paliers 28 et 29 de support du moyeu 27 du pignon 20, le boîtier 30 fixé à l'extension 31 du manchon porte-joints 38 et au carter 32, mais la virole 33 est ici remplacée par une virole différente 45 qui s'étend autour des deux paliers 28 et 29, et porte encore la collerette 35 de butée et de fixation au boîtier 30.

Le montage diffère de celui de la figure 2. Il est entrepris en fixant le boîtier 30, puis consiste à introduire le pignon 20 muni du palier le plus proche de lui (ici 29) dans le boîtier 30, à le poser sur une surface d'appui 50 au fond du boîtier 30, à faire glisser le manchon porte-joints 38 par-dessus le pignon 20 et à le fixer au boîtier 30. La virole 45 munie du palier éloigné du pignon 20 (ici le roulement à billes 28) est alors introduite dans l'alésage du boîtier 30 et autour du moyeu 27 et du palier 29. Le palier 28 est porteur d'une bague entretoise 51 qui finit par toucher l'autre palier 29 pendant ce mouvement, le repousse et soulève le pignon 20 ainsi. Quand la collerette 35 bute contre le boîtier 30, le pignon 20 engrène avec la couronne 21. L'arbre de transmission 25 est enfin installé.

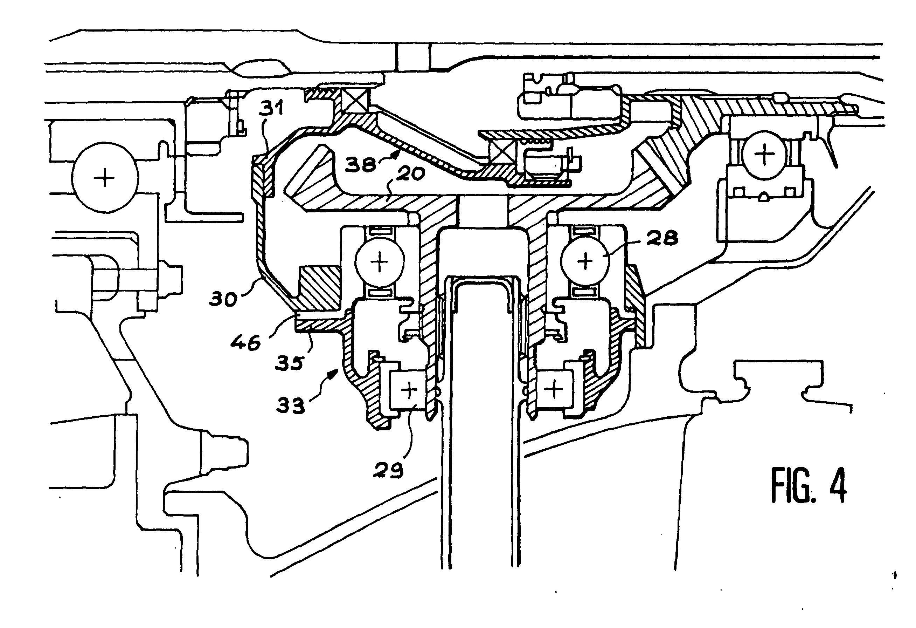

La figure 4 représente une variante de cette idée, où les paliers 28 et 29 occupent les mêmes places que dans la conception antérieure et où on retrouve la virole 33 ; mais la collerette 34 de butée du palier 28 placée sur le rebord du boîtier 30 est remplacée par une collerette 46 placée sous lui, de même que la collerette 35 de la virole 33, avec laquelle elle est en contact. Le montage est à peu près accompli comme précédemment, sauf que les paliers 28 et 29 doivent tous deux être mis en place après que le pignon 20 a été placé dans le boîtier 30.

L'originalité du montage dans l'invention peut être expliquée comme suit. L'accès à l'écrou 19 par l'avant, seul possible auparavant, ne peut être obtenu qu'en pouvant faire glisser le manchon porte-joints 22 vers l'avant, en le détachant du boîtier 30. Ce mouvement d'enlèvement du manchon porte-joints vers l'avant devient inutile avec l'invention, et même impossible puisque la partie arrière, évasée, du manchon porte-joints 38 buterait contre les dents du pignon 20. Le montage du boîtier 30 serait aussi problématique si le manchon porte-joints 38 était dégagé vers l'avant, car son bord avant, surélevé, buterait contre la partie arrière évasée de celui-là. On a donc été conduit à adopter un assemblage où le manchon porte-joints 38 est dégagé vers l'arrière au montage du boîtier 30 et du pignon 20 ; sa bride de fixation 47 bute contre le boîtier 30 par l'arrière, contrairement à l'agencement antérieur. Le montage ne pose pas de difficulté tant que le pignon 20 peut être abaissé au fond du boîtier 30 pour ne pas heurter la bride de fixation 47 ou d'autres parties du manchon porte-joints 38 avant qu'il ne soit à sa position définitive, ce qui est parfaitement possible si le palier 28, qui est un roulement à billes chargé de soutenir le pignon 20 verticalement (ou radialement dans la turbine à gaz), est fixé plus tard au boîtier 30 après avoir été introduit par-dessous celui-ci, relevant alors le pignon 20.

L'agencement de la figure 3, à la virole 45 unique pour le palier 28 de soutien vertical du pignon 20 et l'autre palier 29, monté glissant en direction verticale, est plus simple, probablement plus rigide, mais oblige à inverser les positions classiques des paliers, et l'encombrement plus grand de la virole 45 peut compliquer le montage. C'est pourquoi l'agencement plus ordinaire de la figure 4, où le mode de montage des paliers 28 et 29 se distingue essentiellement par la position de la collerette 46, n'est pas à dédaigner.

## Revendications

1. Agencement comprenant une ligne d'arbres interne (15) et une ligne d'arbres externe (16) qui sont coaxiales, une partie antérieure (5) de la ligne d'arbres interne (15) dépassant d'une extrémité antérieure de la ligne d'arbres externe, un manchon (38) entourant les lignes d'arbres et portant deux joints d'étanchéité (23, 39) associés respectivement à elles, un palier (18) soutenant la ligne d'arbres externe près de l'extrémité antérieure et un écrou (19) de retenue du palier vissé autour de l'extrémité antérieure, **caractérisé en ce qu'**il comprend une entretoise (40) ayant une partie d'ajustement (42) glissée autour de la ligne d'arbres externe et enserrée entre l'écrou et le palier, et une partie d'étanchéité (41) disposée autour de l'écrou et sur laquelle frotte le joint d'étanchéité (39) associé à la ligne d'arbres externe.

2. Agencement selon la revendication 1, comprenant un pignon (20) de prise de mouvement disposé sous l'écrou (19), l'entretoise (40) et le manchon (38).

3. Agencement selon la revendication 2, comprenant un boîtier (30) de support du pignon entourant le pignon et un moyeu (27) du pignon et chargé de soutenir le pignon (20) verticalement, **caractérisé en ce que** le palier (28) est monté en passant par-dessous le boîtier (30) et le manchon porte-joints (38) comprend une bride de fixation (47) au boîtier butant contre le boîtier (30) par l'arrière.

4. Agencement selon la revendication 3, **caractérisé en ce qu'**il comprend une virole (45) unique, fixée au boîtier (30), dans laquelle le palier (28) et un second palier (29), glissant verticalement, sont montés.

## Patentansprüche

1. Montageanordnung mit einem inneren Wellenstrang (15) und einem äußeren Wellenstrang (16), die koaxial zueinander sind, mit einem vorderen Teil (5) des inneren Wellenstrangs (15), der über ein vorderes Ende des äußeren Wellenstrangs hinausragt, mit einer Muffe (38), die die Wellenstränge umgibt und zwei Dichtungen (23, 39) trägt, die entsprechend mit diesen verbunden sind, mit einem Lager (18), das den äußeren Wellenstrang im Bereich des vorderen Endes abstützt, sowie mit einer Haltemutter (19) für das Lager, die auf das vordere Ende aufgeschraubt ist,
**dadurch gekennzeichnet,**
**dass** sie einen Quersteg (40) mit einem Einstellteil (42), das auf den äußeren Wellenstrang aufgeschoben und zwischen der Mutter und dem Lager eingeklemmt ist, sowie einen Dichtungsbereich (41), der um die Mutter herum angeordnet ist und an dem die mit dem äußeren Wellenstrang verbundene Dichtung (39) reibt, aufweist.

2. Montageanordnung nach Anspruch 1, die ein Bewegungsmitnehmer-Ritzel (20) aufweist, das unter der Mutter (19), dem Quersteg (40) und der Muffe (38) angeordnet ist.

3. Montageanordnung nach Anspruch 2, die ein Gehäuse (30) zum Lagern des Ritzels aufweist, das die Aufgabe hat, das Ritzel (20) vertikal abzustützen,
**dadurch gekennzeichnet,**
**dass** das Lager (28) unter dem Gehäuse (30) hindurch eingebaut wird, und die Dichtungshaltermuffe (38) einen Befestigungsflansch (47) zur Befestigung am Gehäuse (30) aufweist, der an dem Gehäuse (30) von hinten anschlägt.

4. Montageanordnung nach Anspruch 3,
**dadurch gekennzeichnet,**
**dass** sie einen einzigen Ring (45) aufweist, der am Gehäuse (30) befestigt ist und in dem das Lager (28) und ein zweites Lager (29), das vertikal gleitet, angebracht sind.

## Claims

1. Assembly comprising an internal line of shafts (15) and an external line of shafts (16), which lines are coaxial, a forward part (5) of the internal line of shafts (15) projecting from a forward end of the external line of shafts, a sleeve (38) surrounding the lines of shafts and supporting two seals (23, 39), each associated with its respective line of shafts (15, 16), a bearing (18) supporting the external line of shafts near the forward end, and a bearing retention nut (19) screwed around the forward end, which assembly is **characterized in that** it comprises a spacer (40) having an adjustment part (42) fitted around the external line of shafts and clamped between the nut and the bearing, and, located around the nut, a sealing part (41) on which the seal (39) associated with the external line of shafts rubs.

2. Assembly according to Claim 1, comprising a power take-off pinion (20) located beneath the nut (19), spacer (40) and sleeve (38).

3. Assembly according to Claim 2, comprising a pinion-supporting casing (30) surrounding the pinion and a pinion hub (27), its function being to support the pinion (20) vertically, which assembly is **characterized in that** the bearing (28) is installed by passing it underneath the casing (30), and the seal sleeve (38) includes a flange (47) for attachment to the casing (30), which it contacts from the rear.

4. Assembly according to Claim 3, **characterized in that** it comprises, fixed to the casing (30), a single collar (45) in which the bearing (28) and a second bearing (29), sliding vertically, are mounted.
